# EUROPÄISCHE PATENTSCHRIFT

(11) **EP 2 703 661 B1**
(45) Veröffentlichungstag und Bekanntmachung des Hinweises auf die Patenterteilung: **31.05.2017**
(21) Anmeldenummer: 13180778.6
(22) Anmeldetag: 16.08.2013
(51) Int. Cl.: F16C 7/06, F16B 7/06, F16B 37/12

(54) **ZUG-DRUCK-STANGE**
PUSH-PULL ROD
TIGE DE TRACTION-COMPRESSION

(30) Priorität: 26.08.2012 DE 202012103224 U
(43) Veröffentlichungstag der Anmeldung: 05.03.2014
(73) Patentinhaber: RO-RA Produktions GmbH, 4862 Schörfling a. Attersee (AT)
(72) Erfinder: Haller, Matthias, 4862 Schörfling (AT)
(74) Vertreter: Lösch, Christoph Ludwig Klaus

(56) Entgegenhaltungen:
- EP-A1- 2 320 100
- GB-A- 1 176 753
- JP-A- S5 729 804
- US-A- 2 751 238
- US-A- 4 097 163
- "HeliCoil Insert Systems", Emhart Teknologies (www.helicoil.in) , 3. März 2007 (2007-03-03), XP002734937, Gefunden im Internet: URL:https://web.archive.org/web/2007030307 3318/http://www.helicoil.in/pdf/HELICOIL%2 0CATALOGUE.pdf [gefunden am 2015-01-23]
- PAUL S. WOLFE: "How to design Wire Thread Inserts. Practical design factors for increasing thread strengh and life", MACHINE DESIGN, 31. Juli 1955 (1955-07-31), Seiten 145-150, XP001650514,

## Beschreibung

Die Erfindung betrifft eine Zug-Druck-Stange.

Zug-Druck-Stangen, die beispielsweise im Flugzeugbau eingesetzt werden, weisen im Allgemeinen einen im Wesentlichen rohrförmigen Körper auf, an dessen Enden sich jeweils eine Befestigungsvorrichtung zur Montage der Zug-Druck-Stange an Montagepunkten befindet. Die Länge der Zug-Druck-Stange ist hierbei beispielsweise über eine oder mehrere Gewindeanordnungen verstellbar, um eine Anpassung an einen vorgegebenen Abstand zwischen den Montagepunkten vornehmen zu

EP 2320100 A1 offenbart eine Zug-Druck-Stange nach dem Oberbegriff des Anspruchs 1.

Der Erfindung liegt die Aufgabe zugrunde, eine einfach handhabbar und zugleich robuste Zug-Druck-Stange anzubieten, die auch bei relativ großen Zug- bzw. Druckkräften eingesetzt werden kann.

Diese Aufgabe wird durch die Merkmale des Schutzanspruchs 1 gelöst. Vorteilhafte Ausführungsformen sind in den Unteransprüchen beschrieben. Erfindungsgemäß weist die Zug-Druck-Stange einen hohlzylindrischen Mittelkörper, zumindest eine Befestigungsvorrichtung mit einem Kupplungselement und einem daran angeordneten Schaft sowie zumindest ein Anschlussstück auf. Die Befestigungsvorrichtung ist zur Längenveränderung der Zug-Druck-Stange über eine Gewindeanordnung drehbar mit dem Anschlussstück verbunden. Mindestens eine der Gewindeanordnungen weist eine schraubenförmig gewundene Stahldrahteinlage auf, die zwischen dem Anschlussstück und dem Schaft angeordnet ist.

Durch die Stahldrahteinlage wird die Festigkeit der damit ausgestatteten Gewindeanordnung erhöht. Insbesondere wird deren Ausrissfestigkeit erhöht. Auf diese Weise ist die Zug-Druck-Stange besonders robust und auch für relativ hohe Zug- und Druckkräfte geeignet.

Die Stahldrahteinlage ist hierbei in bevorzugter Weise helix- bzw. schraubenförmig gewunden.

Zur weiteren Erhöhung der Robustheit kann das Anschlussstück aus einer Aluminiumlegierung gefertigt sein und/oder die Befestigungsvorrichtung kann aus einem Aluminium- oder Stahlwerkstoff bestehen.

In einer vorteilhaften Ausführungsform weist die Gewindeanordnung ferner ein am Schaft ausgebildetes Außengewinde und ein am Anschlussstück ausgebildetes korrespondierendes Innengewinde auf. Das Zusammenwirken des am Schaft ausgebildeten Außengewindes mit der Stahldrahteinlage und dem am Anschlussstück ausgebildeten Innengewinde sorgt für eine besonders robuste Gewindeanordnung.

In einer weiteren bevorzugten Ausführungsform weist die Zug-Druck-Stange ferner eine Rastvorrichtung mit in axialer Richtung gesehen jeweils einander zugewendeten sowie zusammenwirkenden ersten und zweiten Rastelementen auf, welche mittels eines Federelements aneinander gedrückt sind, wobei das erste Rastelement der Rastvorrichtung drehfest mit dem Anschlussstück verbunden ist und das zweite Rastelement drehfest an der Befestigungsvorrichtung, insbesondere am Schaft, angeordnet ist. Durch die Rastvorrichtung wird somit die Längenveränderung der Zug-Druck-Stange gegen unbeabsichtigtes Verstellen gesichert.

Ferner kann das Federelement mit seinem ersten Ende an einem am Schaft der Befestigungsvorrichtung ausgebildeten Stützelement und mit seinem zweiten Ende am zweiten Rastelement abgestützt sein, wobei die Rastelemente die Drehbewegung der Befestigungsvorrichtung relativ zum Anschlussstück in einer Mehrzahl von Drehstellungen mit einer vorbestimmten Verriegelungskraft lösbar arretieren. In besonders vorteilhafter Weise weist das Anschlussstück hierbei auf seiner dem Kupplungselement abgewandten Seite einen Aufnahmehülse, die an dessen dem Kupplungselement abgewandten Seite durch das Stützelement zur Abstützung des ersten Endes des Federelements begrenzt wird, auf.

Mit Hilfe einer derartigen Zug-Druck-Stange wird durch die Abstützung des Federelements zwischen dem Stützelement und dem zweiten Rastelement eine gegenseitige Verspannung der beiden zusammenwirkenden Gewinde zwischen dem Schaft der Befestigungsvorrichtung und dem Anschlussstück erreicht. So können dadurch in Axialrichtung wechselnde Belastungen auf die Zug-Druck-Stange bei entsprechender Wahl der Federkraft und die damit verbundenen Geräuschentwicklungen sowie unangenehmes Klopfen bzw. Schlagen vermieden werden. Des Weiteren wird durch die lose Anordnung des Federelements sowie zumindest eines der beiden zusammenwirkenden Rastelemente am Schaft der Befestigungsvorrichtung eine ohne zusätzliche Werkzeuge zu fügende Baugruppe geschaffen, bei der lediglich das Anschlussstück zur Aufnahme des Schaftgewindes mit der Befestigungsvorrichtung nach Auffädeln zumindest eines Rastelementes sowie des Federelements zusammengebaut werden kann. Damit wird auch die Möglichkeit geschaffen, bei starker Abnützung oder einem Federbruch rasch und ohne Zuhilfenahme von zusätzlichen Werkzeugen die beschädigten bzw. abgenützten Bauteile zu erneuern.

In einer vorteilhaften Ausführungsform ragt der Schaft, insbesondere der profilierte Schaftfortsatz, durch die Aufnahmehülse und an dessen Schaftende ist zumindest ein radial vorragendes Anschlagelement in Form eines Sicherungsrings angeordnet. Auf diese Weise ist eine sichere und einfach herzustellende verdrehsichere Lagerung unter gleichzeitiger Verschiebbarkeit des zweiten Rastelements entlang der axialen Richtung des Schaftes möglich.

In weiteren vorteilhaften Ausführungsformen ist der Mittelkörper mit dem Anschlussstück über eine weitere Gewindeanordnung verbunden und die Zug-Druck-Stange weist einen an das Kupplungselement anbringbaren Schnappbolzen auf, welcher an den Außenumfang des Anschlussstückes anklappbar ist.

Die Erfindung ist anhand eines Ausführungsbeispiels in den Zeichnungsfiguren weiter erläutert. Es zeigen:
- Fig. 1: eine perspektivische Ansicht einer Zug-Druck-Stange;
- Fig. 2: eine Explosionsdarstellung der Zug-Druck-Stange aus Fig. 1;
- Fig. 3: einen Axialschnitt entlang der Mittelebene der Zug-Druck-Stange aus Fig. 1; und
- Fig. 4: einen vergrößerten Ausschnitt aus Fig. 3.

Gleiche bzw. gleichwirkenden Komponenten sind in den Zeichnungsfiguren jeweils mit gleichen Bezugszeichen gekennzeichnet.

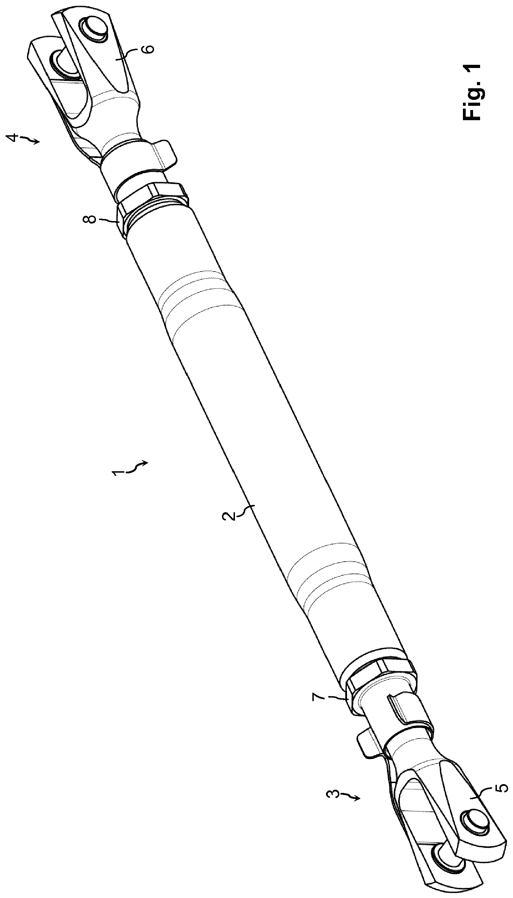

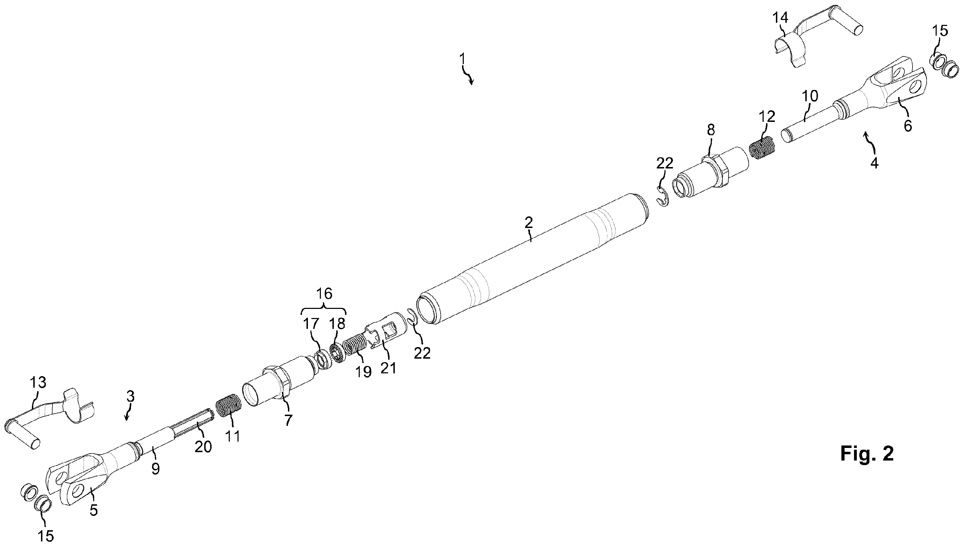

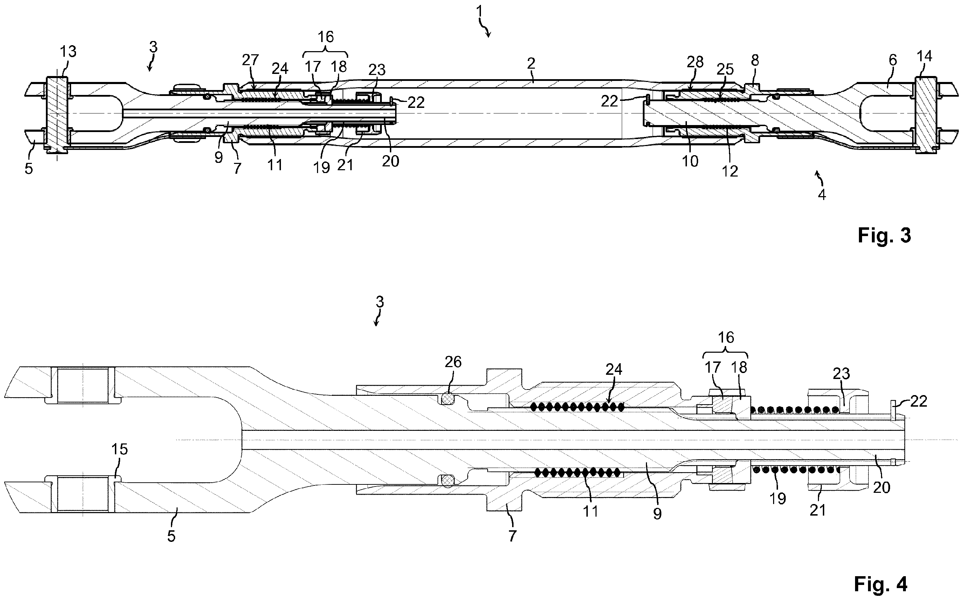

In den Fig. 1 bis 4 ist eine Ausführungsform einer Zug-Druck-Stange 1 gezeigt. Die Zug-Druck-Stange 1 weist einen rohrförmigen hohlzylindrischen Mittelkörper 2 auf, an dessen Enden sich jeweils eine Befestigungsvorrichtung 3 bzw. 4 befindet. Die Befestigungsvorrichtungen 3, 4 sind längenveränderlich mit dem Mittelkörper 2 verbunden, sodass die Länge der Zug-Druck-Stange 1 durch ein Hineindrehen der Befestigungsvorrichtungen 3, 4 in den Mittelkörper 2 bzw. ein Herausdrehen der Befestigungsvorrichtungen 3, 4 aus dem Mittelkörper 2 eingestellt werden kann. Zwischen dem Mittelkörper 2 und den Befestigungsvorrichtungen 3, 4 ist jeweils ein Anschlussstück 7, 8 angeordnet. Die Anschlussstücke 7, 8 sind als hülsenförmige Bauteile ausgebildet und jeweils drehfest mit dem Mittelkörper 2 verbunden. Die Anschlussstücke 7, 8 sind aus einer Aluminiumlegierung hergestellt.

Die erste Befestigungsvorrichtung 3 besteht im Wesentlichen aus einem Kupplungselement 5 und einem Schaft 9, der sich durch das hülsenförmige Anschlussstück 7 erstreckt. In ähnlicher Weise besteht die zweite Befestigungsvorrichtung 4 aus einem Kupplungselement 6 und einem Schaft 10, der sich ebenfalls durch das hülsenförmige Anschlussstück 8 erstreckt.

Die Kupplungselemente 5, 6 sind als Gabelköpfe ausgebildet und dienen der Fixierung der Zug-Druck-Stange 1 an den jeweiligen Montagepunkten der die Zug-Druck-Stange 1 umgebenden Konstruktion. Zum Ausgleich einer Lagedifferenz kann die Länge der Zug-Druck-Stange 1, d.h. der Abstand zwischen den Kupplungselementen 5, 6 zueinander, variierte werden. Dazu sind der Schaft 9 bzw. 10 jeweils mit einem außenliegenden Gewinde und das Anschlussstück 7 bzw. 8 mit einem korrespondierenden Innengewinde versehen. Zwischen dem außenliegenden Gewinde des Schaftes 9 bzw. 10 und dem korrespondierenden Innengewinde des Anschlussstückes 7 bzw. 8 ist eine schraubenförmig gewundene Stahldrahteinlage 11 bzw. 12 positioniert. Die Steigung der schraubenförmig gewundenen Stahldrahteinlage 11, 12 stimmt hierbei mit der Steigung des außenliegenden Gewindes des Schaftes 9 bzw. 10 und dem korrespondierenden Innengewinde des Anschlussstückes 7 bzw. 8 überein.

Das außenliegende Gewinde des Schaftes 9, die Stahldrahteinlage 11 und das Innengewinde des Anschlussstückes 7 bilden damit die Gewindeanordnung 24 und das außenliegende Gewinde des Schaftes 10, die Stahldrahteinlage 12 und das Innengewinde des Anschlussstückes 8 bilden die Gewindeanordnung 25. Dabei ist eine der Gewindeanordnungen 24, 25 als Rechts- und das andere als Linksgewinde ausgeführt.

Über die Gewindeanordnungen 24 und 25 ist damit ein Herein- bzw. Herausschrauben der Befestigungsvorrichtung 2 und/oder 3 möglich, wodurch die Länge der Zug-Druck-Stange 1 variiert werden kann.

In die Kupplungselement 5, 6 ist jeweils ein Schnappbolzen 13 bzw. 14 eingebracht, dessen Schnappring am Außenumfang des Anschlussstückes 7 bzw. 8 angeklappt ist. Ferner weisen die Kupplungselement 5, 6 Lagerschalen 15 auf.

Die erste Befestigungsvorrichtung 3 wirkt mit einer Rastvorrichtung 16 zusammen. Die Rastvorrichtung 16 ist zwischen der ersten Befestigungsvorrichtung 3 und dem Anschlussstück 7 vorgesehen, um eine relative Dreh- bzw. Schwenkbewegung der Befestigungsvorrichtung 3 bezüglich dem Anschlussstück 7 nach der Justierung der Gesamtlänge der Zug-Druck-Stange 1 zu verhindern. In analoger Weise kann zwischen der zweiten Befestigungsvorrichtung 4 und dem Anschlussstück 8 eine weitere Rastvorrichtung vorgesehen sein (in den Figuren nicht dargestellt). Die Rastvorrichtung 16 weisen in axialer Richtung gesehen einander zugewendete sowie zusammenwirkende Rastelemente 17, 18 auf, welche mittels eines Federelementes 19 aneinander bzw. gegeneinander gedrückt sind. Die Rastelemente 17 stellen dabei erste Rastelemente und die Rastelemente 18 zweite Rastelemente dar.

Über ihren Umfang gesehen sind die Rastelemente 17, 18 mit mehreren Fortsätzen sowie dazu gegengleich ausgebildete Ausnehmungen versehen. Dabei können die Fortsätze sowie die damit zusammenwirkenden Ausnehmungen in den ersten und/oder zweiten Rastelementen 17, 18 ausgebildet sein. Durch die Wahl der Anzahl und Größe der Fortsätze und Ausnehmungen kann die Kraft, die benötigt wird, die Länge der Zug-Druck-Stange 1 zu variieren eingestellt werden. Auf diese Weise arretieren die Rastelemente 17, 18 die Drehbewegung der Befestigungsvorrichtung 3, 4 relativ zum Anschlussstück 7, 8 in einer Mehrzahl von Drehstellungen mit einer vorbestimmten Verriegelungskraft. Es wäre auch möglich, die ersten und zweiten Rastelemente 17, 18 mit einem Reibbelag oder dgl. zu versehen, wodurch eine noch feinere Einstellung der Gesamtlänge der Zug-Druck-Stange 1 erfolgen kann. Mit einer Art Mikrostruktur an beiden einander zugewendeten Oberflächen der Rastelemente 17, 18 kann dies ebenfalls erreicht werden.

Die ersten Rastelemente 17 sind als Zahnscheibe ausgebildet, die fest mit dem Anschlussstück 7 verbunden ist. Die zweite Rastelemente 18 sind als Zahnscheibe ausgebildet, die um einen profilierten Schaftfortsatz 20 des Schaftes 9 angeordnet ist. Dabei ist die Profilierung des Schaftfortsatzes 20 und eine zentral Öffnung der Zahnscheibe derart auf einander abgestimmt, dass durch die Profilierung des Schaftfortsatzes 20 die Zahnscheibe drehfest und axial verschiebbar am Schaftfortsatz 20 gelagert ist.

Das Federelement 18 ist in einer Aufnahmehülse 21 positioniert, die das Federelement 18 umgibt. Das Federelement 18 stützt sich mit seinem ersten Ende an einem Stützelement 23 ab. Dieses Stützelement 23 ist am Schaft 9 ausgebildet. Genauer ist das Stützelement 23 im vorliegenden Ausführungsbeispiel als Stützring, der den Schaft 9 bzw. ringförmig umschließt, ausgebildet. Des Weiteren wird die Bewegungsfreiheit des Stützelements 23 durch ein in radialer Richtung des Schaftes 9 herausragenden Sicherungsring 22 in axialer Richtung des Schaftes 9 begrenzt. Mit seinem zweiten Ende stützt sich das Federelement 19 am zweiten Rastelement 18 ab. Beidseits oder einseitig des Federelements 19 können noch Distanz- bzw. Druckscheiben (in den Figuren nicht dargestellt) angeordnet sein, um einen direkten Kontakt zwischen dem Federelement 19 und den zweiten Rastelementen 18 bzw. dem Anschlussstück 7 zu vermeiden.

Zwischen dem Anschlussstück 7 und der Befestigungsvorrichtung 3 ist ferner ein Dichtring 26 angeordnet. Die Anschlussstücke 7, 8 selbst sind aus einem metallischen Werkstoff (insbesondere Aluminium- oder Stahlwerkstoff) gefräst und sind im Wesentlichen hülsenförmig ausgestaltet, wobei sowohl die innenliegende Mantelfläche als auch die außenliegende Mantelfläche mit einem Gewinde versehen sind. Das Gewinde der innenliegenden Mantelfläche bildet gemeinsam mit dem Außengewinde des Schafts 9 bzw. 10 die Gewindeanordnung 24 bzw. 25. Diese Gewindeanordnungen 24, 25 dienen - wie weiter oben beschrieben - zur Änderung der Länge der Zug-Druck-Stange 1. Das Gewinde der jeweiligen außenliegenden Mantelfläche der Anschlussstücke 7, 8 bilden gemeinsam mit jeweils einem korrespondierenden Innengewinde des Mittelkörper 2 weitere Gewindeanordnungen 27 bzw. 28. Diese weiteren Gewindeanordnung 27, 28 dienen der Verbindung des Mittelkörpers 2 mit dem jeweiligen Anschlussstück 7 bzw. 8.

### BEZUGSZEICHENLISTE

- 1: Zug-Druck-Stange
- 2: Mittelkörper
- 3,4: Befestigungsvorrichtung
- 5,6: Kupplungselement
- 7,8: Anschlussstück
- 9, 10: Schaft
- 11, 12: Stahldrahteinlage
- 13, 14: Schnappbolzen
- 15: Lagerschalen
- 16: Rastvorrichtung
- 17, 18: Rastelement
- 19: Federelement
- 20: Schaftfortsatz
- 21: Aufnahmehülse
- 22: Sicherungsring
- 23: Stützelement
- 24,25: Gewindeanordnung
- 26: Dichtring
- 27,28: Gewindeanordnung

## Patentansprüche

1. Zug-Druck-Stange (1), aufweisend:
- einen hohlzylindrischen Mittelkörper (2);
- zumindest eine Befestigungsvorrichtung (3, 4) mit einem Kupplungselement (5, 6) und einem daran angeordneten Schaft (9, 10);
- zumindest ein Anschlussstück (7, 8), wobei die Befestigungsvorrichtung (3, 4) zur Längenveränderung der Zug-Druck-Stange (1) über eine Gewindeanordnung (24, 25) drehbar mit dem Anschlussstück (7, 8) verbunden ist; **dadurch gekennzeichnet, dass** mindestens eine der Gewindeanordnungen (24, 25) eine schraubenförmig gewundene Stahldrahteinlage (11, 12) aufweist, die zwischen dem Anschlussstück (7, 8) und dem Schaft (9, 10) angeordnet ist.

2. Zug-Druck-Stange (1) nach Anspruch 1, wobei das Anschlussstück (7, 8) aus einer Aluminiumlegierung besteht.

3. Zug-Druck-Stange (1) nach einem der Ansprüche 1 oder 2, wobei die Befestigungsvorrichtung (3, 4) aus einem Aluminium- oder Stahlwerkstoff besteht.

4. Zug-Druck-Stange (1) nach einem der vorhergehenden Ansprüche, wobei die Gewindeanordnung (24, 25) ferner ein am Schaft (9, 10) ausgebildetes Außengewinde und ein am Anschlussstück (7, 8) ausgebildetes korrespondierendes Innengewinde aufweist.

5. Zug-Druck-Stange (1) nach einem der vorhergehenden Ansprüche, ferner aufweisend eine Rastvorrichtung (16) mit in axialer Richtung gesehen jeweils einander zugewendeten sowie zusammenwirkenden ersten und zweiten Rastelementen (17, 18), welche mittels eines Federelements (19) aneinander gedrückt sind, wobei das erste Rastelement (17) der Rastvorrichtung (16) drehfest mit dem Anschlussstück (7) verbunden ist und das zweite Rastelement (18) drehfest an der Befestigungsvorrichtung (3), insbesondere am Schaft (9), angeordnet ist.

6. Zug-Druck-Stange (1) nach Anspruch 5, wobei das Federelement (19) mit seinem ersten Ende an einem am Schaft (9) der Befestigungsvorrichtung (3) ausgebildeten Stützelement (23) und mit seinem zweiten Ende am zweiten Rastelement (18) abgestützt ist und dabei die Rastelemente (17, 18) die Drehbewegung der Befestigungsvorrichtung (3) relativ zum Anschlussstück (5) in einer Mehrzahl von Drehstellungen mit einer vorbestimmten Verriegelungskraft lösbar arretieren.

7. Zug-Druck-Stange (1) nach Anspruch 6, wobei das Anschlussstück (3) auf seiner dem Kupplungselement (5) abgewandten Seite einen Aufnahmehülse (21), die an dessen dem Kupplungselement (5) abgewandten Seite durch das Stützelement (23) zur Abstützung des ersten Endes des Federelements (19) begrenzt wird, aufweist.

8. Zug-Druck-Stange (1) nach einem der Ansprüche 5 bis 7, wobei der Schaft (9) auf seiner dem Kupplungselement (5) abgewandten Seite einen profilierten Schaftfortsatz (20) aufweist, durch dessen Profilierung das zweite Rastelement (18) drehfest und axial verschiebbar am Anschlussstück (7) gelagert ist.

9. Zug-Druck-Stange (1) nach einem der Ansprüche 7 oder 8, wobei der Schaft (9), insbesondere der profilierte Schaftfortsatz (20), die Aufnahmehülse (21) durchragt und an dessen Schaftende zumindest ein radial vorragendes Anschlagelement in Form eines Sicherungsrings (22) angeordnet ist.

10. Zug-Druck-Stange (1) nach einem der vorhergehenden Ansprüche, wobei der Mittelkörper (2) mit dem Anschlussstück (7, 8) über eine weitere Gewindeanordnung (27, 28) verbunden ist.

11. Zug-Druck-Stange (1) nach einem der vorhergehenden Ansprüche, mit einen an das Kupplungselement (5, 6) anbringbaren Schnappbolzen (13, 14), welcher an den Außenumfang des Anschlussstückes (7, 8) anklappbar ist.

## Claims

1. Push-pull rod (1), having
- a hollow-cylindrical central body (2);
- at least one attachment device (3, 4) with a coupling element (5, 6) and a shank (9, 10) arranged thereon;
- at least one connection piece (7, 8), wherein the attachment device (3, 4) is rotatably connected to the connection piece (7, 8) by means of a thread arrangement (24, 25) for the purpose of varying the length of the push-pull rod (1);
**characterized in that**
at least one of the thread arrangements (24, 25) has a helically wound steel wire insert (11, 12) which is arranged between the connection piece (7, 8) and the shank (9, 10).

2. Push-pull rod (1) according to Claim 1, wherein the connection piece (7, 8) is made of an aluminium alloy.

3. Push-pull rod (1) according to one of Claims 1 and 2, wherein the attachment device (3, 4) is made of an aluminium or steel material.

4. Push-pull rod (1) according to one of the preceding claims, wherein the thread arrangement (24, 25) further has an outer thread formed on the shank (9, 10) and a corresponding inner thread formed on the connection piece (7, 8).

5. Push-pull rod (1) according to one of the preceding claims, further having a latching device (16) with, as seen in the axial direction, first and second latching elements (17, 18) which face one another and cooperate with one another and which are pressed against one another by means of a spring element (19), wherein the first latching element (17) of the latching device (16) is irrotationally connected to the connection piece (7), and the second latching element (18) is arranged irrotationally on the attachment device (3), in particular on the shank (9).

6. Push-pull rod (1) according to Claim 5, wherein the first end of the spring element (19) is supported on a support element (23) formed on the shank (9) of the attachment device (3), and its second end is supported on the second latching element (18), and in so doing the latching elements (17, 18) releasably arrest, with a predetermined locking force, the rotational movement of the attachment device (3) relative to the connection piece (5) in a plurality of rotational positions.

7. Push-pull rod (1) according to Claim 6, wherein the connection piece (3) has, on its side oriented away from the coupling element (5), a receiving sleeve (21) which is bounded, on its side oriented away from the coupling element (5), by the support element (23) for supporting the first end of the spring element (19).

8. Push-pull rod (1) according to one of Claims 5 to 7, wherein the shank (9) has, on its side oriented away from the coupling element (5), a profiled shank extension (20), by means of the profiling of which the second latching element (18) is mounted on the connection piece (7) in an irrotational and axially displaceable manner.

9. Push-pull rod (1) according to one of Claims 7 and 8, wherein the shank (9), in particular the profiled shank extension (20), passes through the receiving sleeve (21) and, at its shank end, there is arranged at least one radially projecting stop element in the form of a securing ring (22).

10. Push-pull rod (1) according to one of the preceding claims, wherein the central body (2) is connected to the connection piece (7, 8) by means of another thread arrangement (27, 28).

11. Push-pull rod (1) according to one of the preceding claims, with a snap bolt (13, 14) which can be installed on the coupling element (5, 6) and can be swung and snapped onto the outer periphery of the connection piece (7, 8).

## Revendications

1. Tige de traction-compression (1), présentant :
- un corps central cylindrique creux (2) ;
- au moins un dispositif de fixation (3, 4) avec un élément d'accouplement (5, 6) et un arbre (9, 10) disposé sur celui-ci ;
- au moins une pièce de raccordement (7, 8), le dispositif de fixation (3, 4), pour faire varier la longueur de la tige de traction-compression (1), étant connecté par le biais d'un agencement fileté (24, 25) de manière rotative à la pièce de raccordement (7, 8) ;
**caractérisée en ce**
**qu'**au moins l'un des agencements filetés (24, 25) présente un insert en fil d'acier enroulé en forme d'hélice (11, 12), qui est disposé entre la pièce de raccordement (7, 8) et l'arbre (9, 10).

2. Tige de traction-compression (1) selon la revendication 1, dans laquelle la pièce de raccordement (7, 8) se compose d'un alliage d'aluminium.

3. Tige de traction-compression (1) selon l'une quelconque des revendications 1 ou 2, dans laquelle le dispositif de fixation (3, 4) se compose d'un matériau en aluminium ou en acier.

4. Tige de traction-compression (1) selon l'une quelconque des revendications précédentes, dans laquelle l'agencement fileté (24, 25) présente en outre un filetage extérieur réalisé sur l'arbre (9, 10) et un filetage intérieur correspondant réalisé sur la pièce de raccordement (7, 8).

5. Tige de traction-compression (1) selon l'une quelconque des revendications précédentes, présentant en outre un dispositif d'encliquetage (16) avec des premier et deuxième éléments d'encliquetage (17, 18) tournés à chaque fois l'un vers l'autre dans la direction axiale et coopérant l'un avec l'autre, qui sont pressés l'un contre l'autre au moyen d'un élément de ressort (19), le premier élément d'encliquetage (17) du dispositif d'encliquetage (16) étant connecté de manière solidaire en rotation à la pièce de raccordement (7) et le deuxième élément d'encliquetage (18) étant disposé de manière solidaire en rotation sur le dispositif de fixation (3), en particulier sur l'arbre (9).

6. Tige de traction-compression (1) selon la revendication 5, dans laquelle l'élément de ressort (19) est supporté avec sa première extrémité contre un élément de support (23) réalisé au niveau de l'arbre (9) du dispositif de fixation (3) et avec sa deuxième extrémité au niveau du deuxième élément d'encliquetage (18) et les éléments d'encliquetage (17, 18) bloquent en l'occurrence de manière desserrable le mouvement de rotation du dispositif de fixation (3) par rapport à la pièce de raccordement (5) dans une pluralité de positions de rotation avec une force de verrouillage prédéterminée.

7. Tige de traction-compression (1) selon la revendication 6, dans laquelle la pièce de raccordement (3) présente, au niveau de son côté opposé à l'élément d'accouplement (5), une douille de réception (21) qui est délimitée au niveau de son côté opposé à l'élément d'accouplement (5) par l'élément de support (23) pour supporter la première extrémité de l'élément de ressort (19).

8. Tige de traction-compression (1) selon l'une quelconque des revendications 5 à 7, dans laquelle l'arbre (9) présente, sur son côté opposé à l'élément d'accouplement (5), un prolongement d'arbre profilé (20), dont le profilage assure le support du deuxième élément d'encliquetage (18) de manière solidaire en rotation et de manière déplaçable axialement sur la pièce de raccordement (7).

9. Tige de traction-compression (1) selon l'une quelconque des revendications 7 ou 8, dans laquelle l'arbre (9), en particulier le prolongement d'arbre profilé (20), traverse la douille de réception (21) et au moins un élément de butée saillant radialement sous la forme d'une bague de fixation (22) est disposé au niveau de son extrémité d'arbre.

10. Tige de traction-compression (1) selon l'une quelconque des revendications précédentes, dans laquelle le corps central (2) est connecté à la pièce de raccordement (7, 8) par le biais d'un agencement fileté supplémentaire (27, 28).

11. Tige de traction-compression (1) selon l'une quelconque des revendications précédentes, comprenant un boulon d'encliquetage (13, 14) pouvant être monté sur l'élément d'accouplement (5, 6), lequel peut être rabattu sur la périphérie extérieure de la pièce de raccordement (7, 8).
